# EUROPEAN PATENT APPLICATION

(11) **EP 4 516 836 A1**
(43) Date of publication of application: **05.03.2025**
(21) Application number: 24196627.4
(22) Date of filing: 27.08.2024
(51) Int. Cl.: C08G 73/10, C08K 9/06, C09D 179/08

(54) **POLYIMIDE VARNISH WITH IMPROVED PULSE ENDURANCE AND POLYIMIDE COATING MATERIAL PREPARED THEREOF**

(30) Priority: 28.08.2023 KR 20230112846
(71) Applicant: PI Advanced Materials Co., Ltd., Chungcheongbuk-do 27818 (KR)
(72) Inventor: Moon, Gyeong Min, 27818 Jincheon-gun (KR); Ro, Gyeong Hyeon, 27818 Jincheon-gun (KR); Park, Se Joo, 27818 Jincheon-gun (KR); Lee, Ik Sang, 27818 Jincheon-gun (KR)
(74) Representative: Altmann Stößel Dick Patentanwälte PartG mbB

(57) **Abstract**

Provided is a polyimide varnish comprising: polyamic acid and nanosilica, wherein the nanosilica contains 5 to 23 wt% relative to the solid content of the polyamic acid, and the polyimide varnish has an absolute value of zeta potential of 1 to 30 mV.

## Description

### CROSS-REFERENCE TO RELATED APPLICATIONS

This application claims priority under 35 U.S.C. §119 to Korean Patent Application No. 10-2023-0112846, filed on August 28, 2023, in the Korean Intellectual Property Office, the disclosure of which is incorporated herein by reference in its entirety.

### TECHNICAL FIELD

The following disclosure relates to a polyimide varnish and a polyimide coating material prepared therefrom, and more particularly to a polyimide varnish having excellent pulse endurance and a polyimide coating material prepared therefrom.

### BACKGROUND

Polyimide resin refers to a highly heat-resistant resin obtained by performing solution polymerization on aromatic dianhydride and aromatic diamine or aromatic diisocyanate to produce a polyamic acid derivative, followed by ring-closure dehydration at high temperature and imidization. The polyimide resin is an insoluble, infusible, ultra-high heat-resistant resin and has excellent properties such as thermal oxidation resistance, heat resistance, radiation resistance, low-temperature characteristics, chemical resistance, and the like, and thus it is used in a wide range of fields, including heat-resistant advanced materials such as automotive materials, aviation materials, and spacecraft materials, etc., and electronic materials such as insulating coatings, insulating films, semiconductors, and electrode protective films of TFT-LCD. Recently, the polyimide resin is also used in display materials such as optical fibers and liquid crystal alignment films, transparent electrode films by containing conductive filler in the films or performing surface coating, etc.

In particular, in insulated wires used as windings for coils such as motors, the insulating layer (insulating film) coating a conductor is required to have excellent insulation properties, adhesion to the conductor, heat resistance, mechanical strength, etc. Therefore, polyimide is used as a resin to form the insulating layer.

However, in electrical devices having high applied voltages, such as motors used at high voltages among insulating layers or coating materials, high voltages are applied to the insulated wires constituting the electrical device, and polyimides having excellent pulse endurance characteristics to handle such high voltages are still in need of development.

Specifically, partial discharges (corona discharges) readily occur on a surface of the coating where high voltages are applied, and when the occurrence of a corona discharge causes a localized temperature increase or the generation of ozone or ions, the coating of insulated wires may deteriorate, causing premature insulation breakdown and shortening the lifespan of electrical device. Therefore, the use of polyimide as a coating material for conductors, particularly as a coating material where high voltages are applied, requires improvements in pulse endurance characteristics such as insulation breakdown voltage performance or corona discharge initiation voltage.

### SUMMARY

An embodiment of the present invention is directed to providing a polyimide varnish comprising nanosilica in a certain content range, wherein the polyimide varnish has a high absolute value of zeta potential.

Another embodiment of the present invention is directed to providing a polyimide varnish with excellent physical properties such as pulse endurance and haze.

Still another embodiment of the present invention is directed to providing a polyimide cured product in which the polyimide varnish is cured.

Still another embodiment of the present invention is directed to providing a polyimide coating material comprising the polyimide varnish.

Various modifications can be made and various embodiments may be implemented in the present invention, and specific embodiments are illustrated in the drawings and described in detail. However, these embodiments are not intended to limit the present invention to specific embodiments, and should be understood to comprise all modifications, equivalents, and substitutes included in the spirit and scope of the present invention.

Terms used in the present application are only used to describe specific embodiments and are not intended to limit the present invention. Singular expressions include plural expressions unless the context clearly indicates otherwise. In the present specification, terms such as "comprise" or "have" are intended to designate the presence of features, numbers, steps, operations, components, parts, or combinations thereof described in the specification and it should not be understood as precluding the possibility of the presence or addition of one or more other features, numbers, steps, operations, components, parts, or combinations thereof.

When amounts, concentrations, or other values or parameters herein are given as ranges, preferred ranges, or lists of upper desirable values and lower desirable values, it should be understood as specifically disclosing all ranges formed by any pair of any upper range limit or preferred value and any lower range limit or preferred value, regardless of whether the scope is separately disclosed.

Where ranges of numerical values are stated herein, unless otherwise stated, it is intended that the endpoints of the range and the scope of the parent invention within the range are not limited to the specific values stated when defining the range.

As used herein, "dianhydride" is intended to include precursors or derivatives thereof, which are also referred to as "dianhydride" or "acid dianhydride". These products may technically not be dianhydrides, but will nonetheless react with diamines to form polyamic acids, and the polyamic acids may be converted back into polyimides.

As used herein, "diamine" is intended to include precursors or derivatives thereof, which may technically not be diamines, but will nonetheless react with dianhydride acid to form a polyamic acid, and the polyamic acid may be converted back into polyimide.

Further, unless defined otherwise, all terms used herein, including technical or scientific terms, have the same meaning as commonly understood by one of ordinary skill in the art to which the present invention belongs. Terms such as those defined in commonly used dictionaries should be interpreted as having a meaning consistent with the meaning in the context of the related art, and unless explicitly defined in the present application, it is not to be construed in an idealized or overly formal sense. Specific details for the implementation of the invention will be described below.

### Polyimide varnish

In one general aspect, there is provided a polyimide varnish having improved pulse endurance and being usable for application in conductor coating.

In one aspect of the present invention, there is provided a polyimide varnish comprising: polyamic acid and nanosilica, wherein the nanosilica contains 5 to 23 wt% relative to the solid content of the polyamic acid, and the polyimide varnish has an absolute value of zeta potential of 1 to 30 mV.

Here, the zeta potential is a potential difference of colloidal particles suspended in a liquid phase. Particles dispersed in a solution have either a negative (-) or positive (+) electrical charge on surfaces thereof, and the concentration of (+) ions increases around the (-) charged colloidal particles, forming a stern layer. Outside of the stern layer is a diffuse layer, which reduces the concentration of (+) ions, thereby achieving a balance between the (-) and (+) ions. The potential difference between the starting point of the diffuse layer and the point where the (-) and (+) ions are in balance is called the zeta potential. This zeta potential is used as a measure of the stability of the dispersed sol, because it reflects the strength of the repulsive forces between charged particles in the dispersion. The higher the value of zeta potential, whether negative (-) or positive (+), the stronger the electrical repulsion between particles, and thus a distance between the particles increases to achieve a stable state without agglomeration. The value of zeta potential may be used to determine the measure of dispersion stability. In other words, the larger the absolute value of zeta potential, the better the dispersibility. In addition, different solvents, concentrations, pH, functional groups, and surface properties of particles may result in different zeta potential values, and thus it is desirable to use the zeta potential for comparison as a measure of stability.

### Nanosilica

The polyimide varnish of the present invention may comprise inorganic particles to improve physical properties, such as pulse endurance, etc., wherein the inorganic particles are nanosilica, i.e., nano-sized silicon dioxide (SiO₂) fine particles having an average particle diameter of 1000 nm or less, the form and shape of which are not particularly limited.

In addition, the nanosilica may have an amount of 5 to 23 wt% relative to the solid content of the polyamic acid. For example, the lower limit of the amount of nanosilica may be 5.5 wt%, 6.0 wt%, 6.5 wt%, 7.0 wt%, 8.0 wt%, 9.0 wt%, 10.0 wt%, or 11.0 wt% or more. In addition, the upper limit of the amount of the nanosilica may be 22.0 wt%, 21.5 wt%, 21.0 wt%, 20.5 wt%, 20.0 wt%, 19.0 wt%, 18.5 wt%, 18.0 wt%, 17.0 wt%, 16.0 wt%, 15.0 wt%, 14.0 wt%, 13.5 wt%, or 13.0 wt% or less. When the amount of the nanosilica is less than 5 wt%, it is not effective in improving the pulse endurance, and when the amount thereof is more than 23 wt%, it is not desirable since physical properties may decrease. Here, the solid content of the polyamic acid is the total amount of dianhydride monomer and diamine monomer used in the polymerization reaction.

The nanosilica may have an absolute value of zeta potential of 10.0 mV to 40.0 mV. For example, the absolute value of zeta potential of the nanosilica may have a lower limit of 10.5 mV or more, 11.0 mV or more, 11.5 mV or more, 12.0 mV or more, 12.5 mV or more, 13.0 mV or more, 13.5 mV or more, 14.0 mV or more, 14.5 mV or more, 15.0 mV, 16.0 mV or 17.0 mV or more, and may have an upper limit of 38.0 mV or less, 35.0 mV or less, 32.0 mV or less, 30.0 mV or less, 28.0 mV or less, 27.0 mV or less, 26.0 mV or less, 25.0 mV or less, 24.0 mV or less, 23.5 mV or less, 23.0 mV or less, 22.5 mV or less, 22.0 mV or less, 21.0 mV or less, 20.0 mV or less, 19.0 mV or 18.0 mV or less. By controlling the absolute value range of zeta potential of the nanosilica, it is possible to maintain high dispersibility without flocculation among nanosilicas within the polyimide varnish, thereby improving pulse endurance (corona resistance). Here, the zeta potential may be a zeta potential of nanosilica (silica sol) dispersed in an organic solvent, and the pH of the silica sol may be 2 to 12.

In an example, the zeta potential of nanosilica dispersed in an organic solvent may be measured by inputting a refractive index, viscosity, and dielectric constant of the organic solvent (dispersion medium) into Benano180 Zeta Pro manufactured by Bettersize instruments Ltd. The organic solvent may be any one selected from the group consisting of N-methylpyrrolidone (NMP), N-ethylpyrrolidone (NEP), dimethylacetamide (DMAc), dimethylformamide (DMF), and diethylformamide (DEF).

The organic solvent may have, for example, at 25°C, a refractive index of 1.2 to 1.6, a viscosity of 0.5 cP to 2.0 cP, and a dielectric constant of 30 to 40. Preferably, the organic solvent may have, for example, at 25°C, a refractive index of 1.3 to 1.5, a viscosity of 0.7 cP to 1.7 cP, and a dielectric constant of 32 to 39, more preferably, at 25°C, a refractive index of 1.35 to 1.47, a viscosity of 0.8 cP to 1.0 cP, and a dielectric constant of 35 to 38.5, and more preferably, at 25°C, a refractive index of 1.4 to 1.45, a viscosity of 0.85 cP to 0.95 cP, and a dielectric constant of 37 to 38.

In an example, nanosilica dispersed in dimethylacetamide (here, the silica solid content concentration is 30 wt%) may be used.

Further, the nanosilica may have an average particle diameter of 1 to 200 nm, specifically, for example, 5 to 150 nm, 5 to 100 nm, 5 to 70 nm, 10 to 50 nm, or 10 to 30 nm. The average particle diameter may be measured through equipment such as BET, SEM, zeta potential analyzer, and the like.

The nanosilica may also be nanosilica surface-modified with organosilane.

The organosilane of the nanosilica surface-modified with organosilane may comprise one or more selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, vinyltris(2-methoxyethoxy)silane, N,N-diisopropylethylamine phenyltrimethoxysilane, glycidoxypropyl trimethoxysilane (GPTMS), 3-aminopropyltrimethoxy-silane (APTMS), phenyltrimethoxysilane (PTMS), and N-phenyl-3-aminopropyltrimethoxysilane (PAPTES).

Further, the nanosilica surface-modified with organosilane may be obtained by combining, on a surface of the nanosilica, a compound comprising at least one phenyl group at a terminal end and a compound comprising at least one amine group, hydroxyl group, thiol group, or epoxide group at a terminal end. Specifically, the compound containing at least one phenyl group at the terminal may be phenyltrimethoxysilane (PTMS), or N-phenyl-3-aminopropyltrimethoxysilane (PAPTES). Further, the compound comprising at least one amine group, hydroxyl group, thiol group, or epoxide group at a terminal end may be glycidoxypropyl trimethoxysilane (GPTMS) or 3-aminopropyl trimethoxy-silane (APTMS).

The nanosilica surface-modified with the organosilane may be prepared by surface-treating the nanosilica with the organosilane. For example, nanosilica may be obtained by heating organosilanes under acidic or basic conditions and performing surface treatment for about 1 to 24 hours. In addition, the surface modification may be achieved by other known methods, for example, by mixing organosilanes in a solvent and reacting at a temperature of 10 to 100°C or 20 to 60°C for 1 hour to 10 hours or 1 hour to 5 hours to obtain surface-modified nanosilica. To combine two or more compounds on the surface of the nanosilica, each of the above methods may be performed.

The nanosilica surface-modified with organosilane of the present invention may prevent the agglomeration of inorganic particles in the polyimide varnish, and may enhance the interaction with solid content (polyamic acid) due to functional groups of the compound, thereby improving dispersibility and miscibility.

### Polyamic acid

In the present invention, the polyamic acid may comprise dianhydride monomer and diamine monomer as polymerized units.

The dianhydride monomer may comprise at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl)propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

Specifically, the dianhydride monomer may comprise at least one selected from the group consisting of pyromellitic dianhydride (PMDA), biphenyl tetracarboxylic dianhydride (BPDA), and benzophenone tetracarboxylic dianhydride (BTDA), and more preferably, pyromellitic dianhydride (PMDA).

Further, the diamine monomer may comprise at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,4'-diamino diphenylether, 4,4'-diamino diphenyl methane (MDA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3)-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

Specifically, the diamine monomer may comprise at least one selected from the group consisting of 1,4-diaminobenzene (PPD), 4,4'-diaminodiphenyl ether (ODA), and 2,2-bisaminophenoxyphenylpropane (BAPP), and 1,3-bis(4-aminophenoxy)benzene (TPE-R), and preferably, may comprise 4,4'-diaminodiphenyl ether (ODA).

The polyamic acid may contain pyromellitic dianhydride (PMDA) and 4,4'-diaminodiphenyl ether (ODA) as the polymerized units.

In the present invention, in the total dianhydride monomers, pyromellitic dianhydride (PMDA) may be included in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

Further, in the total diamine monomers, 4,4'-diaminodiphenyl ether (ODA) may be included in a ratio of 50 mol% or more, specifically 60 mol% or more, 70 mol% or more, 75 mol% or more, 80 mol% or more, 85 mol% or more, 90 mol% or more, 95 mol% or more, 99 mol% or more, or 100 mol% or more.

The polyamic acid of the present invention may contain 95 to 105 mol% of the dianhydride monomer based on 100 mol% of the diamine monomer. For example, the lower limit of the dianhydride monomer may be 96 mol% or more, 97 mol% or more, 98 mol% or more, 99 mol% or more, or 99.5 mol% or more, and the upper limit thereof may be 104 mol% or less, 103 mol% or less, 102 mol% or less, 101 mol% or less, or 100.5 mol% or less. In an embodiment, the diamine monomer and dianhydride monomer may react in substantially equimolar amounts.

Further, a molar ratio of the dianhydride monomer and the diamine monomer may be 6 : 4 to 4 : 6, preferably 5.5 : 4.5 to 4.5 : 6.5, and more preferably 5 : 5.

Further, the polyamic acid may have a solid content of 10 to 50 wt%. The lower limit of the solid content of the polyamic acid may be, for example, 13 wt% or more, 15 wt% or more, 18 wt% or more, 20 wt% or more, 23 wt% or more, or 24 wt% or more, and the upper limit thereof may be, for example, 48 wt% or less, 45 wt% or less, 43 w% or less, 40 wt% or less, 38 wt% or less, 35 wt% or less, 33 wt% or less, 30 wt% or less, or 27 wt% or less. By adjusting the solid content of the polyamic acid, it is possible to control the increase in viscosity and to shorten the processing time during the curing process.

### Organic solvent

In the present invention, the polyimide varnish further comprises an organic solvent, wherein the organic solvent is not particularly limited as long as it is an organic solvent in which the polyamic acid is soluble, but may be, as one example, an aprotic polar solvent.

Specifically, the organic solvent may comprise at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), diglyme, and naphthalene. Preferably, the organic solvent may be N-methyl-pyrrolidone (NMP), N,N'-dimethylformamide (DMF), N,N'-dimethylacetamide (DMAc), dimethyl sulfoxide (DMSO), and the like.

The organic solvent may further comprise a modifier containing a hydroxyl group (OH) or amine group (NH). Examples of the modifier containing a hydroxyl group (OH) or an amine group (NH) may include ethylamine, triethanolamine, dimethylamine, trimethylamine, diethylenetriamine, ethylenediamine, tributylamine, pyridine, pyrrolidine, methanol, ethanol, propanol, isopropanol, sec-butanol, tert-butanol, n-amyl alcohol, isoamyl alcohol, hexanol, octanol, capryl alcohol, nonyl alcohol, decyl alcohol, undecyl alcohol, lauryl alcohol, myristyl alcohol, cetyl alcohol, stearyl alcohol, allyl alcohol, crotyl alcohol, propargyl alcohol, ethylene glycol, propylene glycol, benzyl alcohol, phenol, and the like. The modifier may control reactivity by reacting with the dianhydride monomer.

### Polyimide varnish

In the present invention, the polyimide varnish may have an absolute value of zeta potential of 1 to 30 mV. For example, a lower limit of the absolute value of zeta potential of the polyimide varnish may be 1.5 mV or more, 2.0 mV or more, 3 mV or more, 4 mV or more, 4.3 mV or more, 5.0 mV or more, 6.0 mV or more, 6.5 mV or more, 7.0 mV or more, 8.0 mV or more, 8.5 mV or more, or 9.0 mV or more, and an upper limit thereof may be 29.5 mV or less, 29.0 mV or less, 28.0 mV or less, 27.0 mV or less, 26.0 mV or less, 25.0 mV or less, 24.0 mV or less, 23.0 mV or less, 22.0 mV or less, 21.5 mV or less, 21.0 mV or less, 20.0 mV or less, 19.0 mV or less, 18.0 mV or less, 17.0 mV or less, 16.0 mV or less, 15.0 mV or less, or 14.0 mV or less.

The polyimide varnish may have a viscosity of 500 cP to 20,000 cP, as measured at a temperature of 30°C and a shear rate of 1s⁻¹. For example, the upper limit of the viscosity may be 20,000 cP, 15,000 cP, or 10,000 cP or less. The lower limit of the viscosity is not particularly limited, but may be 1,000 cP, 1,200 cP, 1,500 cP, or 1,800 cP or more. The viscosity may be measured using, for example, Haake's Rheostress 600 and may be measured under the conditions of a shear rate of 1/s, a temperature of 30°C, and a plate gap of 1 mm. The present invention may provide a polyimide varnish having excellent processability by adjusting the viscosity range.

The polyimide varnish may have a haze of 1.5% or less. For example, the upper limit of the haze may be 1.4% or less, 1.3% or less, 1.2% or less, 1.1% or less, 1% or less, 0.9% or less, or 0.8% or less, and the lower limit thereof is not particularly limited, but may be greater than 0%, 0.05% or more, or 0.1% or more. In an embodiment, the haze may be measured according to ASTM E308 standard using HunterLab's equipment.

In addition, the present invention may prevent agglomeration of nanosilica in the polyimide varnish and have excellent dispersibility to implement a low-level of haze by containing a certain range of high content nanosilica and maintaining an absolute value of zeta potential of the polyimide varnish at a high level.

### Polyimide varnish cured product and coating material

In another aspect of the present invention, there is provided a polyimide cured product obtained by curing the polyimide varnish as described above, wherein the polyimide cured product may be a polyimide film.

The polyimide cured product may have a haze of 1.5% or less. For example, the upper limit of the haze may be 1.4% or less, 1.3% or less, 1.2% or less, 1.1% or less, 1% or less, 0.9% or less, 0.8% or less, 0.7% or less, 0.6% or less, or 0.5% or less, and the lower limit thereof is not particularly limited, but may be more than 0%, 0.05% or more, or 0.1% or more. In an embodiment, the haze may be measured according to ASTM E308 using HunterLab equipment, wherein the polyimide cured product may have a thickness of 20 ± 1.0 um.

The polyimide cured product may have 300 minutes or more of pulse endurance, which is the time that an insulating material withstands a certain voltage according to IEC-60851-5. A lower limit of the pulse endurance may be, for example, 400 minutes or more, 500 minutes or more, 550 minutes or more, 600 minutes or more, 650 minutes or more, 700 minutes or more, 750 minutes or more, 800 minutes or more, 850 minutes or more, 900 minutes or more, 950 minutes or more, 970 minutes or more, 980 minutes or more, 1000 minutes or more, 1100 minutes or more, 1200 minutes or more, 1300 minutes or more, 1400 minutes or more, 1500 minutes or more or 2000 minutes or more. An upper limit thereof is not particularly limited, but may be 4,000 minutes or less. The pulse endurance may be determined by connecting a polyimide coating material to a jig, applying an AC 1.5 kV voltage (frequency of 60 Hz), and measuring the time until a leakage current of 5 mA or more is detected. Here, a thickness of the polyimide cured product may be 26 ± 1.0 um.

Further, according to the present invention, it is possible to improve pulse endurance characteristics by containing a certain range of high content nanosilica and maintaining an absolute value of zeta potential of polyimide varnish at a high level.

In still another aspect of the present invention, there is provided a polyimide coating material comprising the polyimide cured product.

In an embodiment, a method of preparing the polyimide coating material may comprise coating a polyimide varnish on a conductor surface; and imidizing the polyimide varnish coated on the conductor surface.

The conductor may be a copper wire made of copper or a copper alloy, but may also comprise conductors made of other metal materials such as silver wire, etc., or various metal-plated wires such as aluminum or tin-plated conducting wires, etc. The conductor and coating material may have a thickness according to the KS C3107 standard. A diameter of the conductor may be in the range of 0.3 to 3.2 mm, and a standard film thickness of the coating film (average value of the maximum film thickness and minimum film thickness) may be 21 to 194 um for type 0, 14 to 169 um for type 1, and 10 to 31 um for type 2. Depending on the cross-sectional shape of the conductor, the conductor may have a round shape, a rectangular shape, a hexagonal shape, etc., but is not limited thereto.

In another aspect of the present invention, there is provided an electric wire comprising the polyimide coating material.

Specifically, the wire may be a coating wire comprising the polyimide coating material prepared by coating the polyimide varnish on a surface of the wire, followed by imidization. In an embodiment, the coating wire may comprise an electric wire; and a coating material in which the above-described polyimide is coated on a surface of the wire and imidized.

Further, the present invention may provide an electronic device comprising the coating wire. The electronic device may be, for example, an electric motor.

Further, in still another aspect, there is provided a component comprising a molded body formed from the polyimide varnish.

Specifically, the component may comprise electronic circuit board members, semiconductor devices, lithium ion battery members, solar cell members, fuel cell members, motor windings, engine peripheral members, paints, optical components, heat insulators, electromagnetic shielding materials, surge components, dental materials, slide coating, and electrostatic chuck.

### DETAILED DESCRIPTION OF EMBODIMENTS

The following Examples are presented to facilitate the understanding of the present disclosure. These Examples are only provided to more easily understand the present disclosure, but the content of the present disclosure is not limited by these Examples.

### <Example>

### Preparation Example 1: Nanosilica surface-treated with organosilane

Nanosilica 1 surface-treated with organosilane (dimethylacetamide dispersed silica sol, silica solid content concentration of 30 wt%, silica average particle diameter of 10-30 nm, and average zeta potential (absolute value) of 17.86 mV) was prepared. Here, the zeta potential was determined by inputting the refractive index, viscosity, and dielectric constant of dimethylacetamide into Bettersize's Benano180 zeta pro apparatus, conducting duplicate measurements, and subsequently computing the arithmetic mean.

### Preparation Comparative Example 1. Nanosilica

Nanosilica (N-methylpyrrolidone dispersed silica sol, silica solid content concentration of 30 wt%, silica average particle diameter of 10-20 nm, average zeta potential (absolute value) of 8.42 mV) was prepared. Here, the zeta potential was determined by inputting the refractive index, viscosity, and dielectric constant of N-methylpyrrolidone into Bettersize's Benano180 zeta pro apparatus, conducting duplicate measurements, and subsequently computing the arithmetic mean.

### Example 1. Polyimide varnish

### Example 1-1

In a reaction vessel filled with nitrogen gas, an organic solvent containing dimethylacetamide (DMAc) and a modifier (0-2 mol%) was added, and nanosilica surface-treated with organosilane (6 wt% relative to polyimide solid content) according to Preparation Example 1 and pyromellitic dianhydride (PMDA) (92 mol%) as a dianhydride monomer were mixed and stirred at 40°C for 30 minutes. Then, 4,4'-diaminodiphenylether (ODA) (100 mol%) as a diamine monomer and pyromellitic dianhydride (PMDA) (8 mol%) were added, and stirred and polymerized at 40°C for about 1 hour to prepare polyimide varnish (25 wt% polyimide solid content).

### Examples 1-2 to 1-7

A polyimide varnish was prepared in the same manner as in Example 1-1, except that the content of nanosilica surface-treated with organosilane according to Preparation Example 1 was used differently, as described in Table 1 below.

### Comparative Examples 1-1 to 1-2

A polyimide varnish was prepared in the same manner as in Example 1-1, except that the nanosilica according to Preparation Comparative Example 1 was used instead of using the nanosilica surface-treated with organosilane according to Preparation Example 1, and the content thereof was used differently, as described in Table 1 below.

### Comparative Examples 1-3 to 1-4

A polyimide varnish was prepared in the same manner as in Example 1-1, except that the content of nanosilica surface-treated with organosilane according to Preparation Example 1 was used differently, as described in Table 1 below.

Table 1 below shows the polyamic acid composition, the solid content, and type and content of nanosilica of Examples 1-1 to 1-7 and Comparative Examples 1-1 to 1-4.

**[Table 1]**

| Classification | Polyamic acid (Dianhyd ride + Diamine) | Polyimide solid content | Nanosilica | |
|---|---|---|---|---|
| | | | Kind | Amount relative to polyimide solid content (wt%) |
| Example 1-1 | PMDA (100 mol%) + ODA (100 mol%) | 25 wt% | Preparation Example 1 | 6 wt% |
| Example 1-2 | | | Preparation Example 1 | 8 wt% |
| Example 1-3 | | | Preparation Example 1 | 10 wt% |
| Example 1-4 | | | Preparation Example 1 | 12 wt% |
| Example 1-5 | | | Preparation Example 1 | 15 wt% |
| Example 1-6 | | | Preparation Example 1 | 18 wt% |
| Example 1-7 | | | Preparation Example 1 | 20 wt% |
| Comparative Example 1-1 | | | Preparation Comparative Example 1 | 6 wt% |
| Comparative Example 1-2 | | | Preparation Comparative Example 1 | 12 wt% |
| Comparative Example 1-3 | | | Preparation Example 1 | 3 wt% |
| Comparative Example 1-4 | | | Preparation Example 1 | 25 wt% |

### Example 2. Polyimide cured product (polyimide film)

### Example 2-1

The polyimide varnish prepared according to Example 1-1 was rotated at a high speed of 2,000 rpm to remove air bubbles. Then, the degassed polyimide varnish was applied on a glass substrate (230 mm x 230 mm, thickness: 0.55 mm) using a spin coater.

Next, a film-type polyimide cured product (thickness of 20 ± 1.0 um or 26 ± 1.0 µm) was obtained by curing under the conditions of 110°C (20 minutes) → 150°C (20 minutes) → 200°C (20 minutes) → 300°C (20 minutes) under a nitrogen atmosphere.

### Examples 2-2 to 2-7

A polyimide cured product was prepared in the same manner as in Example 2-1 except that the polyimide varnishes according to Examples 1-2 to 1-7 were used, respectively, instead of the polyimide varnish according to Example 1-1.

### Comparative Examples 2-1 to 2-4

A polyimide cured product was prepared in the same manner as in Example 2-1 except that the polyimide varnishes according to Comparative Examples 1-1 to 1-4 were used, respectively, instead of the polyimide varnish according to Example 1-1.

### Example 3. Polyimide coating material

### Example 3-1

An electric wire containing a polyimide coating material with a coating thickness of 110±10 um was prepared in a coating curing furnace by repeating 20 to 28 times the process of coating, drying, and curing the polyimide varnish according to Example 1-1 on an angularly shaped copper wire.

### Examples 3-2 to 3-7

A wire containing a polyimide coating material was prepared in the same manner as in Example 3-1 except that the polyimide varnishes according to Examples 1-2 to 1-7 were used, respectively, instead of using the polyimide varnish according to Example 1-1.

### <Experimental Example>

### Experimental Example 1. Comparison in Zeta Potential of Polyimide Varnishes

The zeta potential of polyimide varnishes according to Examples and Comparative Examples was measured twice by inputting the refractive index, viscosity, and dielectric constant of dimethylacetamide into Bettersize's Benano180 zeta pro apparatus, and an average value thereof was obtained by computing the arithmetic mean. Table 2 below lists the absolute values of the averages obtained by computing the arithmetic mean.

**[Table 2]**

| Classification | Nanosilica | | Polyimide varnish zeta potential (mV) |
|---|---|---|---|
| | Kind | Amount relative to polyimide solid content (wt%) | |
| Example 1-1 | Preparation Example 1 | 6 wt% | 2.01 |
| Example 1-2 | Preparation Example 1 | 8 wt% | 4.42 |
| Example 1-3 | Preparation Example 1 | 10 wt% | 6.13 |
| Example 1-4 | Preparation Example 1 | 12 wt% | 9.32 |
| Example 1-5 | Preparation Example 1 | 15 wt% | 13.74 |
| Example 1-6 | Preparation Example 1 | 18 wt% | 21.3 |
| Example 1-7 | Preparation Example 1 | 20 wt% | 29 |
| Comparative Example 1-1 | Preparation Comparative Example 1 | 6 wt% | 0.4 |
| Comparative Example 1-2 | Preparation Comparative Example 1 | 12 wt% | 0.38 |
| Comparative Example 1-3 | Preparation Example 1 | 3 wt% | 0.13 |
| Comparative Example 1-4 | Preparation Example 1 | 25 wt% | 31 |

According to Table 2, the zeta potential of the varnish generally tends to decrease as the content of nanosilica increases, as shown in Comparative Examples 1-1 and 1-2. However, it could be confirmed in Examples 1-1 to 1-7 that the zeta potential of the varnish tends to increase as the content of nanosilica increases. This indicates that the present invention has increased dispersibility by using nanosilica with a large absolute value of the zeta potential, and thus even if the varnish contains a certain range of high content of nanosilica, the zeta potential of the varnish was high, not decreasing.

### Experimental Example 2. Evaluation of physical properties of polyimides

### (1) Pulse endurance

The pulse endurance was determined according to IEC-60851-5 by connecting the polyimide films (thickness of 26 ± 1.0 µm) of Examples and Comparative Examples to a jig, applying an AC 1.5-kV voltage (frequency of 60 Hz), and measuring the time until a leakage current of 5 mA or more was detected. The results are shown in Table 3 below.

### (2) Haze

Using HunterLab's equipment, the haze of the polyimide films (thickness of 20 ± 1.0 µm) or varnishes of Examples and Comparative Examples was measured based on ASTM E308 standards, and the results are shown in Table 3 or 4 below.

**[Table 3]**

| Classificati on | Nanosilica | | Pulse endurance (min) | Film Haze (%) |
|---|---|---|---|---|
| | Kind | Amount relative to polyimide solid content (wt%) | | |
| Example 2-1 | Preparation Example 1 | 6 wt% | 857 | 0.2 |
| Example 2-2 | Preparation Example 1 | 8 wt% | 980 | 0.4 |
| Example 2-3 | Preparation Example 1 | 10 wt% | 1,020 | 0.3 |
| Example 2-4 | Preparation Example 1 | 12 wt% | 1,141 | 0.4 |
| Example 2-5 | Preparation Example 1 | 15 wt% | 1,509 | 0.6 |
| Example 2-6 | Preparation Example 1 | 18 wt% | 2,050 | 0.4 |
| Example 2-7 | Preparation Example 1 | 20 wt% | 560 | 0.8 |
| Comparative Example 2-1 | Preparation Comparative Example 1 | 6 wt% | 282 | 8.7 |
| Comparative Example 2-2 | Preparation Comparative Example 1 | 12 wt% | 370 | 10.4 |
| Comparative Example 2-3 | Preparation Example 1 | 3 wt% | 242 | 0.2 |
| Comparative Example 2-4 | Preparation Example 1 | 25 wt% | No film formed (Unmeasurabl e) | No film formed (Unmeasurabl e) |

**[Table 4]**

| Polyimide varnish | Nanosilica | | Varnish Haze (%) |
|---|---|---|---|
| | Kind | Amount relative to polyimide solid content (wt%) | |
| Example 1-1 | Preparation Example 1 | 6 wt% | 0.6 |
| Example 1-2 | Preparation Example 1 | 8 wt% | 0.5 |
| Example 1-3 | Preparation Example 1 | 10 wt% | 0.7 |
| Example 1-4 | Preparation Example 1 | 12 wt% | 0.6 |
| Example 1-5 | Preparation Example 1 | 15 wt% | 0.7 |
| Example 1-6 | Preparation Example 1 | 18 wt% | 0.7 |
| Example 1-7 | Preparation Example 1 | 20 wt% | 0.6 |
| Comparative Example 1-1 | Preparation Comparative Example 1 | 6 wt% | 6.2 |
| Comparative Example 1-2 | Preparation Comparative Example 1 | 12 wt% | 9.8 |
| Comparative Example 1-3 | Preparation Example 1 | 3 wt% | 0.6 |
| Comparative Example 1-4 | Preparation Example 1 | 25 wt% | 0.7 |

According to Table 3, the polyimide film of the present invention has significantly better pulse endurance characteristics by using nanosilica with a large absolute value of zeta potential, as compared to Comparative Examples 2-1 and 2-2. In addition, Examples 2-1 to 2-7 showed significantly improved pulse endurance characteristics by containing 6 to 20 wt% of nanosilica relative to the polyimide solid content, but Comparative Examples 2-3 and 2-4, where the content thereof was outside the above range, showed very low pulse endurance characteristics of less than 300 minutes, or could not be measured because a film was not formed.

Further, according to Tables 3 and 4, all the polyimide varnishes of the present invention and film-type cured products thereof were able to achieve low levels of haze characteristics. Specifically, it was confirmed that the varnishes according to Examples 1-1 to 1-7 had the haze of 0.7% or less, and the films according to Examples 2-1 to 2-7 had the haze of 0.8% or less. This indicates that the nanosilica did not agglomerate and was evenly dispersed.

Therefore, the present invention could maintain the absolute value of zeta potential of the polyimide varnish at a high level while containing a certain range of high content nanosilica, and at the same time implement excellent pulse endurance, and have excellent physical properties such as haze.

The polyimide varnish of the present invention may have excellent physical properties such as haze while having excellent pulse endurance by including a certain range of nanosilica and satisfying a high zeta potential absolute value of polyimide varnish.

The present invention may also have excellent utilization as conductor coating for use in windings for electric vehicles (EVs).

In the specification, details capable of being sufficiently recognized and inferred by those skilled in the art of the present invention are omitted, and various modifications can be made within the scope that does not change the technical spirit or essential configuration of the present invention other than the specific examples described in the present specification. Therefore, the present invention may be practiced in other ways than specifically described and exemplified herein, which can be understood by those skilled in the art.

## Claims

1. A polyimide varnish comprising: polyamic acid and nanosilica, wherein the nanosilica contains 5 to 23 wt% relative to the solid content of the polyamic acid, and the polyimide varnish has an absolute value of zeta potential of 1 to 30 mV.

2. The polyimide varnish of claim 1, wherein the nanosilica is surface-modified with organosilane.

3. The polyimide varnish of claims 1 or 2, wherein the organosilane of the nanosilica surface-modified with organosilane comprises one or more selected from the group consisting of methyltrimethoxysilane, hexamethyldisiloxane, n-octyltrimethoxysilane, n-octyltriethoxysilane, isooctyltrimethoxysilane, dodecyltrimethoxysilane, octadecyltrimethoxysilane, propyltrimethoxysilane, hexyltrimethoxysilane, 3-methacryloxypropyltrimethoxysilane, 3-acryloxypropyltrimethoxysilane, 3-(methacryloxy)propyltriethoxysilane, 3-(methacryloxy)propylmethyldimethoxysilane, 3-(acryloxypropyl)methyldimethoxysilane, 3-(methacryloxy)propyldimethylethoxysilane, styrylethyltrimethoxysilane, phenyltriethoxysilane, p-tolyltriethoxysilane, vinylmethyldiacetoxysilane, vinyldimethylethoxysilane, vinylmethyldiethoxysilane, vinyltrimethoxysilane, vinyltriethoxysilane, vinyltriacetoxysilane, vinyltriisopropoxysilane, vinyltrimethoxysilane, vinyltriphenoxysilane, vinyltri-t-butoxysilane, vinyltris(isobutoxy)silane, vinyltriisopropenoxysilane, vinyltris(2-methoxyethoxy)silane, N,N-diisopropylethylamine phenyltrimethoxysilane, glycidoxypropyl trimethoxysilane (GPTMS), 3-aminopropyltrimethoxy-silane (APTMS), phenyltrimethoxysilane (PTMS), and N-phenyl-3-aminopropyltrimethoxysilane (PAPTES).

4. The polyimide varnish of any one of claims 1 to 3, wherein the nanosilica has an absolute value of zeta potential of 10.0 mV to 40.0 mV.

5. The polyimide varnish of any one of claims 1 to 4, wherein the nanosilica has an average particle diameter of 1 to 200 nm.

6. The polyimide varnish of any one of claims 1 to 5, wherein the polyamic acid has a solid content of 10 to 50 wt%.

7. The polyimide varnish of any one of claims 1 to 6, wherein the polyamic acid contains dianhydride monomer and diamine monomer as polymerized units.

8. The polyimide varnish of any one of claims 1 to 7, wherein the dianhydride monomer comprises at least one selected from the group consisting of pyromellitic dianhydride (PMDA), biphenyl tetracarboxylic dianhydride (BPDA), benzophenone tetracarboxylic dianhydride (BTDA), oxidiphthalic dianhydride (ODPA), diphenylsulfone-3,4,3',4'-tetracarboxylic dianhydride (DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenone tetracarboxylic dianhydride, bis(3,4-dicarboxyphenyl)methane dianhydride, 2,2-bis(3,4-dicarboxyphenyl)propane dianhydride, p-phenylenebis(trimelytic monoester acid anhydride), p-biphenylenebis(trimelytic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalene tetracarboxylic acid dianhydride, 1,4,5,8-naphthalenetetracarboxylic dianhydride, and 4,4'-(2,2-hexafluoroisopropylidene)diphthalic acid dianhydride.

9. The polyimide varnish of any one of claims 1 to 8, wherein the diamine monomer comprises at least one selected from the group consisting of 1,4-diaminobenzene (PPD), 4,4'-diaminodiphenyl ether (ODA), 2,2-bisaminophenoxyphenylpropane (BAPP), metaphenylenediamine, 3,3'-dimethylbenzidine, 2,2'-dimethylbenzidine, 2,4-diaminotoluene, 2,6-diaminotoluene, 3,5-diaminobenzoic acid (DABA), 3,4'-diamino diphenylether, 4,4'-diamino diphenyl methane (MDA), 3,3'-dimethyl-4,4'-diaminobiphenyl, 2,2'-dimethyl-4,4'-diaminobiphenyl (m-tolidine), 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dimethoxybenzidine, 2,2'-dimethoxybenzidine, 3,3'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenyl sulfoxide, 3,4'-diaminodiphenyl sulfoxide, 4,4'-diaminodiphenyl sulfoxide, 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene (TPE-R), 1,4-bis(3-aminophenoxy)benzene (TPE-Q), 1,3-bis(3-aminophenoxy)-4-trifluoromethylbenzene, 3,3'-diamino-4-(4-phenylphenoxy)benzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, 1,4-bis[2-(4-aminophenyl)isopropyl]benzene, 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3)-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl]sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, and 2,2-bis[4-(4-aminophenoxy)phenyl]-1,1,1,3,3,3-hexafluoropropane.

10. The polyimide varnish of any one of claims 1 to 9, wherein the polyamic acid contains pyromellitic dianhydride (PMDA) and 4,4'-diaminodiphenyl ether (ODA) as polymerized units.

11. The polyimide varnish of any one of claims 1 to 10, further comprising an organic solvent, wherein the organic solvent comprises at least one selected from the group consisting of N-methyl-pyrrolidone (NMP), N,N'-dimethylformamide (DMF), N,N'-diethylformamide (DEF), N,N'-dimethylacetamide (DMAc), dimethylpropanamide (DMPA), N,N-diethylacetamide (DEAc), dimethyl sulfoxide (DMSO), 3-methoxy-N,N-dimethylpropanamide (KJCMPA), p-chlorophenol, o-chlorophenol, gammabutyrolactone (GBL), diglyme, and naphthalene.

12. The polyimide varnish of any one of claims 1 to 11, wherein the polyimide varnish has a haze of 1.5% or less.

13. A polyimide cured product obtained by curing the polyimide varnish according to any one of claims 1 to 12.

14. The polyimide cured product of claim 13, wherein the polyimide cured product has 300 minutes or more of pulse endurance, which is the time that an insulating material withstands a certain voltage according to IEC-60851-5.

15. A polyimide coating material comprising the polyimide varnish according to any one of claims 1 to 12.
